# EUROPEAN PATENT SPECIFICATION

(11) **EP 1 912 353 B1**
(45) Date of publication and mention of the grant of the patent: **22.02.2012**
(21) Application number: 07118208.3
(22) Date of filing: 10.10.2007
(51) Int. Cl.: H04B 10/08

(54) **Monitoring system, optical transmitting/receiving device and monitoring level setting method**
Überwachungssystem, optische Sende-/Empfangsvorrichtung und Verfahren zur Einstellung der Überwachungsebene
Système de surveillance, dispositif d'émission/réception optique et procédé de configuration de niveau de surveillance

(30) Priority: 11.10.2006 JP 2006277055
(43) Date of publication of application: 16.04.2008
(73) Proprietor: NEC Corporation, Minato-ku Tokyo 108-8001 (JP)
(72) Inventor: Yano, Yutaka, Tokyo Tokyo 108-8001 (JP)
(74) Representative: Vossius & Partner

(56) References cited:
- WO-A-97/28584
- US-B1- 6 178 025
- US-B1- 6 529 316

## Description

This application is based upon and claims the benefit of priority from Japanese patent application No. 2006-277055 filed on October 11, 2006.

The present invention relates to a monitoring system, an optical transmitting/receiving device and a monitoring level setting method, and more particularly to a monitoring system for a span loss of transmission section loss in an optical transmission system using an optical amplifier.

At present, most of the optical communication apparatuses have a function of detecting an optical input signal loss and issuing an alarm. Further, nowadays, there is a demand for a function of detecting not only the optical input signal loss but also a state change in particular. That is, it is required to have a function of detecting a failure occurring in the optical fiber on the transmission line such as the cut of optical fiber or an increased loss on the transmission line (span loss) and making an automatic report from a transmission apparatus. It is intended to maintain the transmission line and divert the signal, that is, estimate a variation factor, evaluate a fault point, and arrange for the repair works, or start the diverting works of the working route to a spare route.

For these purposes, a technique for monitoring a loss on the transmission line and issuing an alarm upon detecting a certain amount of increase has been devised. For example, a technique as disclosed in

JP-A-59-104531 is representative. This technique provides means of detecting a deteriorated state before complete disconnection by discriminating an increased loss on the transmission line in terms of plural threshold values. However, since a loss on the transmission line is different between each station, it is required to set the threshold values to be adaptable to a loss on each section of the transmission line to make such fine threshold values appropriately operable, resulting in a problem that it takes a lot of time on the operation.

Conversely, most optical transmitting/receiving devices have a disconnection detection function, because it is easy to detect the disconnection. It is not easy to set the threshold value for suitably detecting a subtle change before disconnection. If things go wrong, a false alarm is repeatedly generated, the watchman becomes familiar with the false alarm and may not take correct steps at the time of true alarm.

Before the spread of an optical amplification relay system, an accident in the optical fiber on the transmission line meant the disconnection or almost equivalent, extremely deteriorated state. A more or less variation of loss in the optical fiber on the transmission line had no serious influence on the transmission quality. However, these days, in the optical amplification relay system of wavelength division multiplexing method that is widely spread, the transmission line has to satisfy the slightly severer conditions, whereby it is required to make the stricter management. The details will be described below.

First of all, an optical amplifier has a limited input range. It has two factors. One factor is a limit of the monitor range. Though the optical amplifier is provided with a circuit for monitoring the level at each point, it can function correctly only in a certain finite range. The other factor is the property that there is a limit to the range of gain to obtain the flat gain, which is important especially in the wavelength division multiplexing optical amplifier. The output per wave of the optical amplification repeater is generally a fixed value, regardless of the input. If the input level is outside the design range, the gain is outside the design range, resulting in a problem that a gain tilt occurs.

In a system designed to keep an Optical Signal to Noise Ratio (OSNR) at a fixed value or above, there is a limit to the system design. In the optical amplification repeater, a certain noise light is superposed on the output light accompanied by amplification, whereby if the input power into the amplifier is reduced, the OSNR that is the signal to noise power ratio is smaller. A Bit Error Rate (BER) directly representing the quality of signal and the OSNR have a strong, almost one-to-one correlation, in which a decreased OSNR leads almost directly to a degraded BER.

Therefore, in designing the transmission system, the input level into each amplification repeater is predicted from the span loss information, and the OSNR at the receiving end is predicted based on it and compared with the OSNR required to obtain the desired BER, whereby the feasibility of the amplification relay transmission is judged. If the required OSNR is not secured, a regenerative repeater (a repeater that regenerates the optical signal once converting it back to electric signal) is inserted in the middle to divide the amplification relay section and assure the required OSNR. Incidentally, the cost of the regenerative repeater is several tens of times as high as that of the amplification repeater in the wavelength division multiplexing system, whereby the regenerative repeater is desirably designed to be unemployed, if possible.

In this manner, in the optical amplification relay system, the input level of each amplification repeater is supposed to have a lower limit in designing the line, whereby it is required to make the operation not to fall below this lower limit. Giving a supplementary explanation, there is an OSNR line design method for considering the mutually different span losses in a certain value covering them. For example, a transmission system consisting of five spans of 12 dB, 24 dB, 15 dB, 27 dB and 14 dB is designed considering that all span losses are 30 dB. In this manner, the setting and monitoring of the lower limit alarm threshold value are simplified. On the other hand, since the system is designed in expectation of the loss beyond the actually required span loss, the transmittable distance is undesirably often extremely shorter.

Further, giving a supplementary explanation for reference sake, the reason why the wavelength division multiplexing optical amplification relay method has widely spread irrespective of increased things to be cared is that the economical merit is extremely great. The optical amplification relay and the wavelength division multiplexing method are very congenial. Since the optical amplifier can amplify the wavelength division multiplexed light collectively without causing excess distortion, the repeater which was conventionally required for each wavelength channel can be replaced with one small and inexpensive optical amplifier, whereby a dramatic reduction in the transmission cost was achieved.

As a result of the dramatic spread of the optical amplification relay system of wavelength division multiplexing method, the loss condition on the transmission line is somewhat stricter than conventionally, but is not a non-practical restraint and can be sufficiently treated.

To summarize, the monitoring of span loss variation, which triggers the review for maintaining the line or constructing the alternative path of signal, has the following three monitoring requirements.
1. Monitoring the span loss for unusual change to predict a serious accident such as fiber-cut,
2. Monitoring the physical input range within the upper and lower limits to allow the optical amplifier to exhibit the normal performance, and
3. Monitoring the span loss according to the OSNR line design (the input level does not fall below the input level lower limit value).

Generally, in the wavelength division multiplexing optical transmission system, it is customary that the level diagram of the wavelength division multiplexed light is a linear superposition of the level diagrams per wave. Specifically speaking, for example, when the input level of an optical amplifier is -23 dBm per wave and the output level is +1 dBm per wave, the total input/output level where the number of wavelengths is ten is ten times (10 dB increase) the level per wave, and -13 dBm/+11 dBm. The total input/output level where the number of wavelengths is forty is 40 times (16 dB increase) the level per wave, and -7 dBm/+17 dBm.

On the other hand, the optical amplifier amplifies and outputs the wavelength division multiplexed light as one light, irrespective of how many wavelengths there are in the wavelength division multiplexed light. Therefore, it is customary that the optical amplifier for use in the system where the number of wavelengths dynamically changes has a control mechanism for maintaining the output level per wave at a predetermined level even if the number of wavelengths is changed by obtaining the information on the number of wavelengths at that time with some method.

As a disclosed technique for means of allowing the amplifier to know the current number of wavelengths, a technique for counting the wavelengths at the sending end station is disclosed, for example, in JP-A- 11-196068. Also, another technique for transmitting the number of wavelengths multiplexed at the end station to each repeater that adjusts the output level according to the indicated number of wavelengths is disclosed in Japanese Patent Laid-Open No. 6-069890. Nowadays, a simple optical spectral analyzer module is commercially available, in which there is a form in which the spectral analyzer is disposed inside or near the optical amplifier, counts the number of wavelengths and passes the number of wavelengths to the optical amplifier.

In such wavelength division multiplexed optical amplifier, a technique for maintaining the output power per wave constant by obtaining the wavelength number information has been already proposed, but there is no prior art useful for monitoring the transmission line loss.

As detailed above, with the function of detecting and reporting that the transmission section loss is abnormal, or inappropriate, using the monitor function for the input level of the optical amplifier, there is a problem that it is conventionally not easy to individually set the detection threshold value appropriately according to each transmission section loss.

US-B1-6 529 316 discloses an optical network monitoring system according to the preamble of claim 1.

An exemplary object of the invention is to provide a monitoring system, an optical transmitting/receiving device and a monitoring level setting method in which the detection threshold value can be easily set with the function of detecting and reporting that the input level of an optical amplifier is inappropriate due to a span loss variation and consequently the best transmission performance can be drawn out. This object is achieved with the features of the claims.

Examples and an embodiment of the present invention will be described below with reference to the drawings.
FIG. 1 is a diagram showing an example of an optical amplification repeater for use in the present invention;
FIG. 2 is a diagram for explaining the example of figure 1;
FIG. 3 is a diagram of a system to which the example of figure 1 is applied;
FIG. 4 is an explanatory diagram for a wavelength division multiplexing transmission system to which the exemplary embodiment of the invention is applied;
FIG. 5 is a view showing an example of a set of alarm threshold values in the exemplary embodiment of the invention;
FIG. 6 is another diagram of an exemplary system ; and
FIG. 7 is another diagram of an exemplary system.

### First example

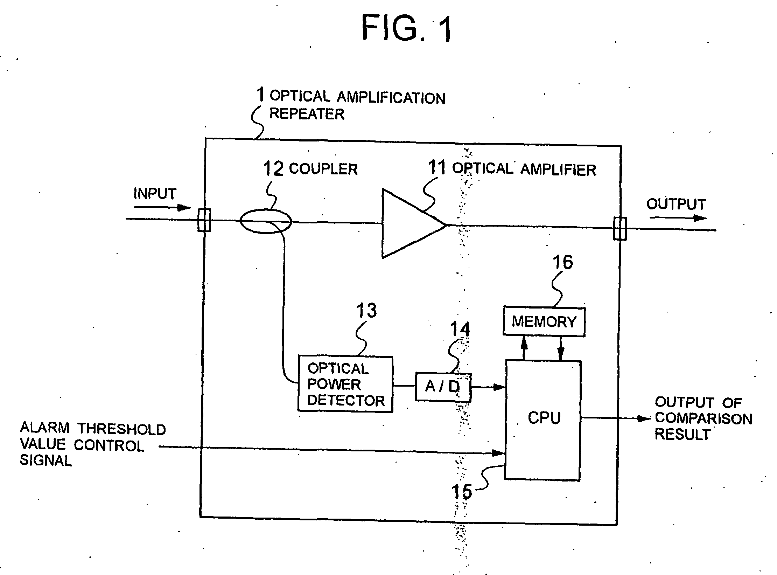

FIG. 1 is a functional block diagram of an optical amplification repeater according to a first example. Referring to FIG. 1, the optical amplification repeater 1 according to the first example comprises an optical amplifier 11, a coupler 12, an optical power detector 13, an A/D (analog/digital) converter 14, a CPU (control unit) 15, and a memory 16.

The optical amplifier 11 has a function of amplifying an input optical signal from the optical fiber (not shown) that is the transmission line, and the coupler 12 has a light branching function of the input optical signal. The optical power detector 13 has a function of detecting the optical power, using the optical branch signal from the coupler 12, and supplying it to the A/D converter 14. The A/D converter 14 has a function of converting the detected optical power into digital information for supply to the CPU 15, and the CPU 15 of the control unit has a function of comparing the digital information of optical power with a predetermined threshold value prestored in the memory 16 and issuing an alarm in accordance with the comparison result. The memory 16 has a function of storing the predetermined threshold value for issuing the alarm.

In such a configuration, a part of the input optical signal is branched by the coupler 12, so that a voltage output according to the optical power is obtained by the optical power detector 13. The voltage output is digitized in the A/D converter 14 and taken into the CPU 15. On the other hand, the alarm threshold value is conveyed in the form of a control signal from outside the optical amplification repeater 1 into the CPU 15, and stored in the memory 16. In the CPU 15, a magnitude comparison between the input optical power and the threshold value is made, whereby if the input optical power exceeds the upper limit or lower limit threshold value, a signal that is the source of alarm is issued.

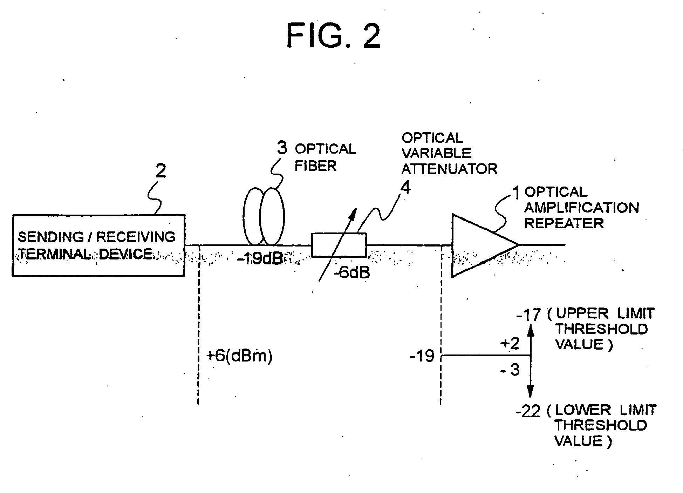

Referring to FIG. 2, the operation of a product having an alarm function according to the first example will be described below using the contents of function confirmation experiments. An optical signal sent from a sending/receiving terminal device 2 passes through a simulation transmission section including an optical fiber 3 (length 80 km: span loss 19 dB) and an optical variable attenuator 4 (loss set value 6 dB) and enters the optical amplification repeater 1 according to the first example. A loss on this simulation transmission section was initially set at 25 dB. The sending level is +6 dBm, and the input level of the optical amplification repeater 1 is -19 dBm.

An alarm threshold value for the input level of the optical amplification repeater 1 can be set in a range from -30 dBm to +6 dBm by a command from the remote site. The threshold value was set to -17 dBm (upper limit threshold value) on the up side, and - 22 dBm (lower limit threshold value) on the down side. This is equivalent to saying that the threshold value is set where the span loss is decreased by 2 dB and increased by 3 dB.

And if the loss amount of the optical variable attenuator 4 was increased or decreased, the level up alarm was issued when the input level was above - 17 dBm and the level down alarm was issued when the input level was below -22 dBm, whereby it was confirmed that this function could correctly operate.

Herein, the upper limit threshold value -17 dBm (span loss 17 dB) and lower limit threshold value - 22 dBm (span loss 22 dB) are based on the span loss upper limit value (input level lower limit value) used with the OSNR line design as described in the paragraph of Related Art. With this setting of alarm threshold value, when there occurs a span loss increase to breach the OSNR line design, its situation can be grasped at once.

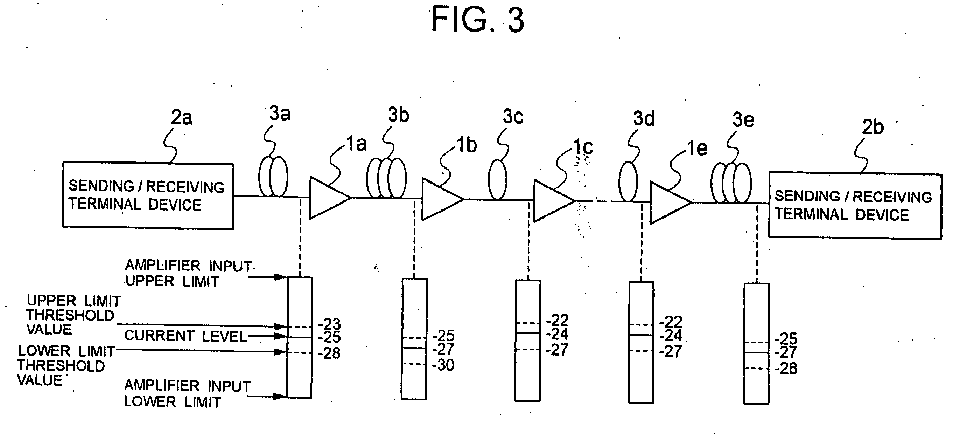

The effectiveness of this function and setting will be briefly described below. For example, a relay transmission system as shown in FIG. 3 is considered. In FIG. 3, the transmission line between the sending/receiving terminal device 2a and the sending/receiving terminal device 2b includes the optical fibers 3a to 3e and the optical amplification repeaters 1a to 1e. Since the distance and the laying condition are different for each span of this transmission line, each span loss is generally varied. In making the OSNR line design, it is common to combine various span losses.

In the transmission system with the line designed in this manner, a limit to the increase of span loss (the input lower limit value of the optical amplifier) is different for each span. Even if all the optical amplifiers for use are the same, the monitoring level differs depending on a place where it is applied. For the same reason, the amplifier input level requires individual setting or monitoring, whereby the first exemplary embodiment is effective to implement it.

In FIG. 3, the individual upper limit threshold value and lower limit threshold value are set to the level (amplifier input level) of optical signal that is passed through the optical fiber 3a to 3e into each optical amplification repeater 1a to 1e and the sending/receiving terminal device 2b, whereby the optical signal level is monitored.

In FIG. 1, the branching by the coupler 12 and the voltage conversion by the optical power detector 13 are employed as means of monitoring the input optical power for the optical amplifier 11. However, this configuration is not requisite for the first example, but any means capable of acquiring a signal having the correlation with the input optical power of the optical amplifier 11 may be employed. For example, an optical spectral analyzer may be used for monitoring.

In setting the alarm threshold value, the threshold value is generally decided and set based on individual span losses used in the OSNR line design as described before. In making different setting for each span in this manner, there is a method in which a network monitoring center has a table of threshold values, and the remote setting is made from the network monitoring center to the optical amplifiers. Such method is clearly efficient and effective to prevent mistakes.

The first example provides the following effect. As a cause of input level variation, the loss on the transmission line may be possibly changed. Therefore, the input level monitoring function can be used as the monitoring function for transmission line loss. Accordingly, the input level variation alarm can be grasped as a symptom of the abnormal transmission line to take action such as precautionary measure. And the alarm threshold value, which was conventionally fixed at the time of factory shipment, can be varied, and set by a command from the remote site. Consequently, the optimal threshold value can be remotely set individually for respective transmission section loss in the communication network, and the abnormality on the transmission line can be detected greatly accurately.

### Exemplary embodiment

In the first example, the wavelength division multiplexing transmission system is not referred to. In the wavelength division multiplexing transmission system of a WDM (Wavelength Division Multiplexing) method, the number of wavelengths is dynamically changed. In such a case, the input level of the optical amplifier is also changed. Accordingly, it is demanded that there is no detection error or detection omission for a change in the number of wavelengths in the function of detecting the abnormal loss on the transmission line and issuing the alarm.

Thus, in an exemplary embodiment of the invention, in issuing the alarm, the input optical power is divided by the wavelength number information, and the power level per wave is compared with the threshold value. Thereby, the input level variation monitoring function can be implemented in which there is no false alarm or detection omission for a change in the number of wavelengths. That is, in the CPU 15, the input optical power is divided by the wavelength number information for conversion into the power level per wave.

The operation of a product having the alarm function according to the exemplary embodiment will be described below using the contents of function confirmation experiment. The transmission system is a wavelength division multiplexing system, in which multiple signals are subjected to wavelength division multiplexing and transmitted. It is well known that the number of wavelengths are counted by a sending terminal station (upstream device) and notified to each amplifier downstream through a device monitoring control line.

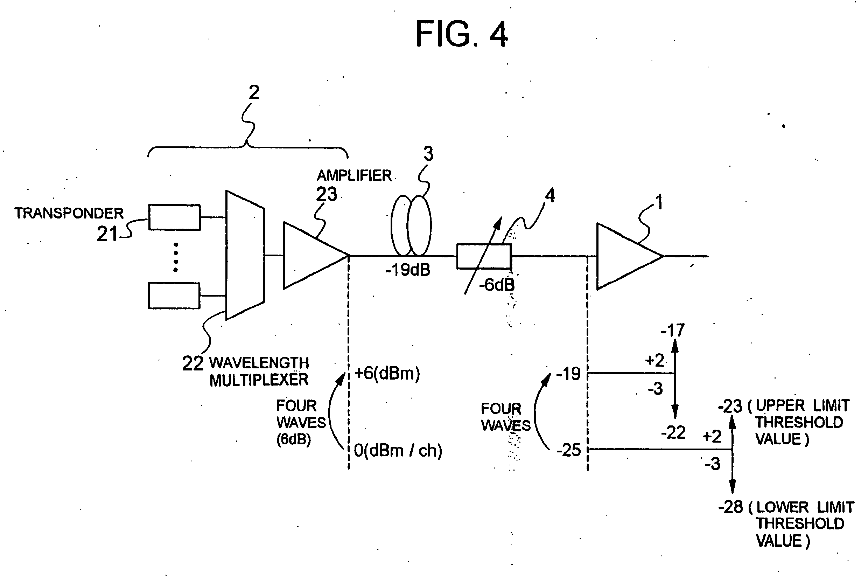

FIG. 4 is a schematic diagram of the wavelength division multiplexing transmission system according to the exemplary embodiment. The same or like parts are designated by the same numerals as in FIGS. 1 to 3. In FIG. 4, the sending/receiving terminal device 2 comprises a plurality of transponders 21, a wavelength multiplexer 22 for multiplexing the outputs from the transponders 21, and an optical amplifier 23 for amplifying a wavelength division multiplexed signal from the multiplexer 22, in which the output of the optical amplifier 23 is the output from the sending/receiving terminal device 2, and sent to the optical fiber 3.

The optical signal sent from the sending/receiving terminal device 2 passes through the simulation transmission section including the optical fiber 3 (length 80 km: loss 19 dB) and the optical variable attenuator 4 (loss set value 6 dB) and enters the optical amplification repeater 1. A loss on this simulation transmission section is initially set at 25 dB. If the number of wavelengths is four, and the sending level is 0 dBm per wave (hereinafter denoted as 0 dBm/ch), the input level per wave of the optical amplifier in the optical amplification repeater 1 is -25 dBm/ch. A total power of the wavelength division multiplexed light is a transmission power of +6 dBm and an optical amplifier input power of -19 dBm.

An alarm threshold value (per wave) for the input level of the optical amplifier in the optical amplification repeater 1 can be set in a range from -36 dBm/ch to 0 dBm/ch by a command from the remote site. In the exemplary embodiment, the threshold value was set to -23 dBm/ch (upper limit threshold value) on the up side, and -28 dBm/ch (lower limit threshold value) on the down side. This is equivalent to saying that the threshold value is set where the span loss is decreased by 2 dB and increased by 3 dB.

If the loss amount of the optical variable attenuator 4 was gradually decreased down to 4 dB from the above state, a level up alarm was issued near 2 dB or above. Also, if the loss amount was gradually increased up to 4 dB, a level down alarm was issued near 3 dB or above.

If the number of wavelengths was increased from four to sixteen, the total optical power was increased by 6 dB (four times), and the total reception power was increased by 6 dB to reach -13 dBm. However, the wavelength number information was appropriately conveyed to the optical amplifier, and the power lever per wave was compared with the threshold value, whereby the level up alarm was not issued. Next, if the number of wavelengths was decreased to one wave, the total optical power was decreased by 6 dB from the initial value to reach - 25 dBm, but the level down alarm was not issued. From the above, it was confirmed that this function could operate correctly.

Though in the exemplary embodiment the wavelength number information is obtained from the upstream device, the wavelength number information may be obtained by comprising a monitor having an optical spectroscopic analysis function, like an optical spectral analyzer in each node.

To know the transmission line loss accurately, it is required to take a difference between the transmission power to the transmission line and the reception power from the transmission line. For that purpose, the information from the distant site has to be collected, whereby the implementation of the function is complex. If there is no information from the far site, a false alarm or alarm issuing leakage may occur. On the contrary, if the alarm is issued by monitoring the power entering from the transmission line into the optical amplifier, the sending power information at the far site is unnecessary, whereby the function is easily implemented. Since the sending power is not known, it is required not to malfunction for a change in the number of wavelengths.

However, with the exemplary embodiment, it is possible to detect a variation in the transmission line loss only at the reception level without collecting the transmission power information, and provide the alarm function that does not issue the false alarm or cause the alarm leakage for a change in the number of wavelengths.

### Second example

A second example will be described below. If many transmission sections connected by the optical amplification devices are included in the communication network as shown in FIG. 3, a loss on the transmission sections is usually full of variety. In such a case, to appropriately set the alarm threshold value as described in the first example, it is required to manually make the setting for the individual transmission lines, whereby if the scale is larger, the management becomes difficult. Thus, the second example provides means of patterning the transmission line losses full of variety, and selecting and setting the transmission loss from the prepared patterns to facilitate the setting.

Actually, it is a routine practice to make the fitting (patterning) to any of the prepared loss patterns for the transmission section losses full of variety already at the time of line design work. Accordingly, it is necessary to decide the alarm threshold value for abnormal loss on the transmission line according to each one of the prepared patterns.

For example, six kinds of patterns of transmission section loss, "19 dB", "22 dB", "25 dB", "28 dB", "31 dB" and "34 dB" are decided at every 3 dB. Herein, for example, the loss pattern "22 dB" corresponds to the transmission section in which the loss is greater than 19 dB and smaller than 22 dB. Similarly, the loss pattern "19 dB" corresponds to the transmission section in which the loss is greater than 16 dB and smaller than 19 dB. However, the transmission section loss smaller than 16 dB is purposely increased to 16 dB to accommodate it. It is assumed that the transmission section in which the loss is greater than 34 dB does not exist. In this manner, all the transmission section losses are classified into the six loss patterns.

For each of the six loss patterns, the alarm threshold value is decided. In installing the transmission system at actual site, one of the six loss patterns is selected and set in accordance with each transmission section. If the alarm threshold values for the loss patterns are given names such as "for 22 dB", "for 25 dB" and so on, the management is easier. The alarm threshold values for the loss patterns may be prestored in the memory 16 of the optical amplification repeater 1 shown in FIG. 1, or may be selected and set by the setup software in making the setup from the network management center, not shown.

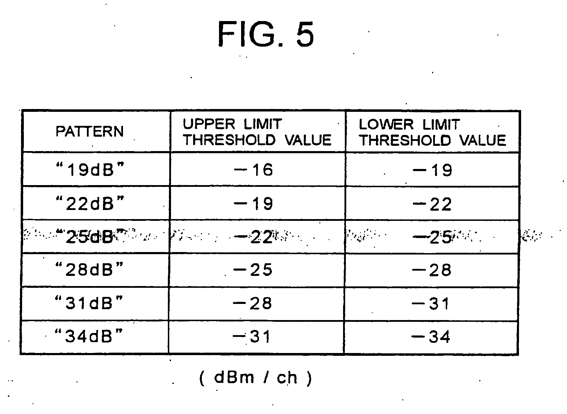

A specific example using numerical values is given below. It is supposed that the sending level is 0 dBm/ch. Herein, since the transmission section corresponding to the loss pattern "22 dB" is the transmission section in which the loss is greater than 19 dB and smaller than 22 dB, the normal input level range of the transmission section corresponding to the loss pattern "22 dB" is from - 19 dBm/ch to -22 dBm/ch. -19 dBm/ch and -22 dBm/ch are determined as the alarm threshold value (an upper limit threshold value and a lower limit threshold value) for the loss pattern "22 dB". Similarly, the alarm threshold values for other loss patterns are determined. FIG. 5 shows a set of the alarm threshold values for the six loss patterns.

The span losses for a certain transmission link were measured. The span losses are 23.7 dB, 15.4 dB, 29.7 dB, 22.1 dB and 30.3 dB in sequence from the first span. They correspond to "25 dB", "19 dB", "30 dB", "25 dB" and "31 dB" by the fitting of the loss patterns as previously described. In laying the system, each of the corresponding loss patterns was selected and set to each optical amplifier of the system, whereby the input level alarm threshold value was automatically set to the proper value.

### Third example

A third example will be described below. If many transmission sections connected by optical amplification devices are included in the communication network, the loss on the transmission sections is usually full of variety. In such a case, if the alarm threshold value is appropriately set as described in the first example, it is required to manually make the setting for the individual transmission lines, whereby if the scale is larger, the management becomes difficult. Thus, the third example provides means of automatically setting the threshold values for the transmission line losses full of variety to detect the loss variation appropriately.

For this purpose, a concept is introduced of setting the alarm threshold value for loss variation in a combination of two parameters, "reference value" and "allowable width", such that the lower limit threshold value is a lower point 3 dB down from the reference value and the upper limit threshold value is an upper point 2 dB up from the reference value. Further, the reference value is set to the input power level of the optical amplifier at certain point of time.

Referring to FIG. 1, the third example will be specifically described below. It is supposed that when the input power is -25 dBm/ch, a control signal for updating the reference value is sent to the CPU 15 of the optical amplification repeater 1. Then, the value (-25 dBm/ch) is stored as the reference value in the memory 16 of which the value does not disappears after the power is turned off. Further, the alarm threshold value for loss variation is automatically updated in accordance with the changed reference value. Since the default values of allowable width for loss variation are prestored as the level up side 2 dB and the level down side 3 dB in the memory 16 of the optical amplification repeater 1, the default values are applied here. For example, as the alarm threshold value, the lower limit threshold value is set to -28 dBm/ch and the upper limit threshold value is set to -23 dBm/ch. These allowable widths of 2 dB on the level up side and 3 dB on the level down side also are able to be changed by the command.

After such settings, if the input power is changed by increasing or decreasing the loss amount of the variable attenuator, the lower limit exceeding alarm was correctly issued at -28 dBm/ch, which is 3 dB down from the first input level (-25 dBm/ch), and the upper limit exceeding alarm was correctly issued at -23 dBm/ch, which is 2 dB up from the first input level.

Next, when the input power is -23 dBm/ch that is 2 dB up from the first input level, a control signal for updating the reference value is sent to the optical amplification repeater 1 to update the reference value, so that the alarm threshold value for loss variation is automatically updated. That is, as the alarm threshold value, the lower limit threshold value is -26 dBm/ch and the upper limit threshold value is -21 dBm/ch. After such settings, if the input power is changed by increasing or decreasing the loss amount of the variable attenuator, the lower limit exceeding alarm was issued correctly at -26 dBm/ch, and the upper limit exceeding alarm was issued correctly at -21 dBm/ch.

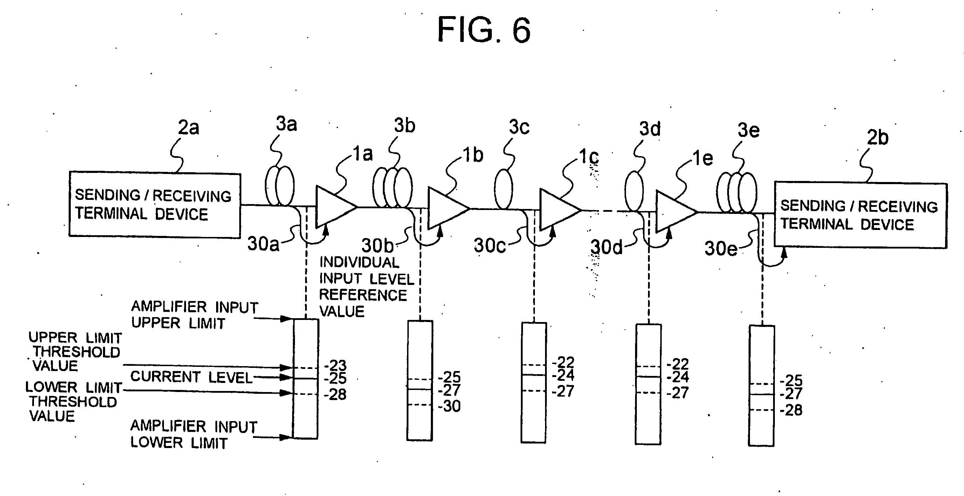

FIG. 6 shows a concept diagram of the operation of a system using the optical amplification repeaters according to the third example. In FIG. 6, the same or like parts are designated by the same numerals or signs as in FIG. 3. In FIG. 6, the upper limit threshold value and lower limit threshold value are set for the level (amplifier input level) of optical signal passed through the optical fiber 3a to 3e into each optical amplification repeater 1a to 1e and the sending/receiving terminal device 2b, whereby the optical signal level is monitored. In FIG. 6, reference numerals 30a to 30e denote individual input level reference values (amplifier input levels) into the optical amplification repeaters 1a to 1e and the sending/receiving terminal device 2b.

Though the input power level into the optical amplification repeater is different for each span, the alarm threshold value is automatically set at 2 dB in the loss decrease direction and at 3 dB in the loss increase direction. As shown in FIG. 6, the appropriate alarm threshold value is automatically set in accordance with the span loss.

When the optimal threshold value is remotely set individually for each transmission section in the communication network from the monitoring center in the communication network, there are too many management points if the number of transmission sections is large, whereby it is difficult to make the management. According to the third example, with a policy that the input level value at a certain point of time is taken in as the reference value (individual input reference level indicated at 30a to 30e) and the alarm is issued if the input level is increased or decreased by allowable width from the reference value, whereby the appropriate threshold value almost fit to the respective transmission line loss can be set without trouble.

Though in the third example the allowable width value from the reference value is prestored in the memory within the optical amplification repeater, it may be set by a control signal. Also, though in the third example the reference value is updated by the control signal from the outside, it may be updated at a fixed interval by providing a timer.

In this manner, when the alarm threshold value is automatically set, its set value may fall outside the normal operation range of the amplifier. Therefore, a function of detecting that the input level is outside the normal operation range of the amplifier and issuing an alarm also should be equipped. Even if such function of monitoring the input level under different conditions from the invention is provided along with the functions of the invention, there is no trouble that the alarm detection functions interfere with each other. In addition to making the setting according to the total common policy, if the individual setting is allowed, it is possible to take a measure of setting the special threshold value for only the section in which the loss variation is likely to occur. A merit of making the setting according to the total common policy and the minute capability to respond to manual individual setting can coexist.

### Fourth example

Though in the third example the reference value of span loss variation is automatically set in accordance with the loss on each transmission line, the time and trouble of setting is greatly reduced, but the setting rule for the allowable width is uniform over the communication network. Of course, this allowable width can be individually set, but if the scale is larger, the management becomes difficult. Though there is a demand for making the allowable width of span loss variation different for each transmission section, its reason is that the probability of span loss variation depends on the distance of transmission section and the laying environment.

For example, if there are transmission sections with the distance of 50 km and 100 km, and loss variation allowable values for the transmission sections are the same, it is problematical that the loss variation can be appropriately detected. There may possibly occur inconvenience that the alarm is frequently issued in a certain section regardless of no large damage on the transmission line, but the alarm is not issued in the other section even if a significant damage on the transmission line starts to occur. Namely, the probability of loss variation depends on the conditions such as the length of transmission line and the aerial or buried laying environment. Thus, means of automatically setting the loss variation allowable width depending on each transmission section is provided in the fourth example.

In a communication network management center, the information such as the distance and the laying environment is usually provided as the attribute information of the transmission section. Thus, it is possible to treat various transmission sections while maintaining the convenience according to a common setting policy by linking the loss variation allowable width with the attribute information. Specifically, if the level variation allowable amount per unit distance is decided as the coefficient, the loss variation allowable width over the entire transmission section can be adaptively set.

For example, the coefficient is decided as 0.04 dBp-p/km in the case where the laying environment is buried and 0.20 dBp-p/km in the case where the laying environment is aerial. Also, any transmission section expects a loss variation of 0.5 dBp-p uniformly as the loss variation amount due to the connector connection to decide the value.

In the case where a certain transmission section of 65 km consists of the buried section of 50 km and the aerial section of 15 km, the loss variation of 0.04×50 + 0.20×15 + 0.5 = 5.5 dBp-p is not regarded as abnormal. If the coefficient for apportioning the loss variation allowable width to the loss increase side and the loss decrease side is decided at a rate of 60% to 40%, the allowable width is set to 3.3 dB on the loss increase side and 2.2 dB on the loss decrease side.

Also, in the case where another transmission section of 35 km consists of the buried section of 30 km and the aerial section of 4 km, the loss variation allowable width is 0.04×30 + 0.20×4 + 0.5 = 2.5 dBp-p, whereby the allowable width is set to 1.5 dB on the loss increase side and 1.0 dB on the loss decrease side.

In this manner, the threshold value for monitoring the loss variation can be set at the optimal value that is not too sensitive or insensitive, depending on how the individual transmission section is configured. If the setting policy coefficient is modified with this function, it is possible to come closer to such an ideal setting that the alarm is issued only when there occurs a damage on the transmission line.

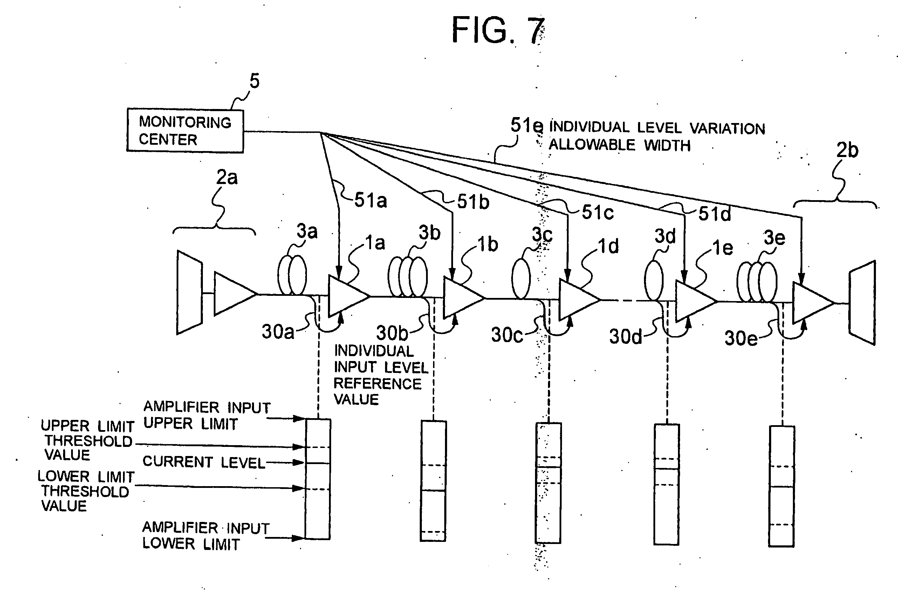

FIG. 7 shows a concept diagram of the operation of a system using the optical amplification repeater according to the fourth example. In FIG. 7, the allowable width is set to each optical amplification repeater 1a to 1e and the optical sending/receiving terminal device 2b from the monitoring center 5, and the individual input level reference value 30a to 30e is set based on the actual input level value. The reference value is automatically optimized in accordance with the actual input level, and the allowable width is automatically optimized depending on the length of transmission line and the laying situation. The almost ideal threshold value for monitoring the loss variation can be automatically set without spending a lot of time.

### Fifth example

A fifth example will be described below. The fifth example is effective in the case where plural factors exist in the loss variation phenomenon as described before and one factor is extracted from them. The loss variations are classified according to those factors, because the rate of loss variation with respect to varying speed is different with these factors.

The factors of loss variation rapidly changing with the time may be conceivably due to a cause that the worker within the station hitches the optical fiber on the clothing or pinches the optical fiber into a cover without awareness. If returned to the original loss at a moment, the maintenance operation of the transmission line is not taken, but there is strong possibility that the digital error of transmission signal occurs instantly when the loss rapidly increases, whereby it is required to specify the cause location.

Though the digital error of transmission signal is monitored at the sending/receiving terminal including a regenerative repeater with opto-electrical conversion, it is not possible to specify where the abnormality occurs in the system relaying the transmission signal at multiple stages through the optical amplifiers. As means of knowing the abnormality, each optical amplifier is required to monitor a sudden change in the input level. The input level value of the optical amplifier may be left as an operating log of the device. However, since it is difficult to have the recording rate and capacity capable of recording an instantaneous variation, the instantaneous variation can not be left in the log. Accordingly, it is necessary that the occurrence of instantaneous variation is detected in real time and the event is recorded at that point of time. The notification may be made, as needed.

The factors of loss variation slowly changing with the time may possibly occur as a result of being affected by the external environment such as temperature or snowfall on the transmission line. Intrinsically, since the optical cable is produced to be less affected by the external environment, it is estimated, from the appearance of such a change, that the cable is damaged and becomes sensitive to the external environment. It is desirable to take the maintenance action such as exchanging the cable by diverting to another route before the cut.

As described above, in monitoring changes in the input level, it is desired in some cases that the alarm is issued by classifying the changes according to the temporal behavior. If the alarm is issued without classifying the changes according to the temporal tendency, the cable survey on site is arranged for an instantaneous loss variation occurring due to a fiber handling error of the worker. Also, even if the damaged aerial cable causes a temporally rapid loss variation to occur due to a wind pressure during the monitor of slow variation, the damage may progress without the operator being aware of the abnormality, resulting in an unfavorable situation from the viewpoint of maintenance management for the communication network.

The classification of loss variations according to temporal tendency is implemented by performing a filtering process for extracting a predetermined frequency component from observation signal data of loss variations and making the determination with the threshold value. Many implementation methods for such filtering process are well known, and any implementation method may be employed. It may be implemented by an electronic circuit hardware, or processed digitally after performing the A/D conversion. As the package location, the electronic circuit hardware is disposed between the optical power detector 13 and the A/D converter 14 in FIG. 1. It may be combined with their electronic circuits. If it is implemented through the digital signal processing, the output of the optical power detector 13 may be A/D converted at a sufficient rate, taken into the CPU 15, and arithmetically operated by the CPU 15.

A method for extracting the variation component that is rapid or slow in the loss variation through the digital signal processing may be implemented by, for example, a digital filter, or a process equivalent to the data filtering process.

For example, as a simple algorithm for detecting only the rapid component, there is a method in which if a change in the input level beyond a fixed width occurs within a certain short period of time, it is regarded as the rapid change. In this case, it is desirable that the threshold value is set so that the change may not be detected unless the variation width is beyond the fixed value even though the rapid change occurs. Another implementation method makes use of updating the input level reference value with the timer, as described in the third example. Since the reference value is automatically updated with the timer, the slow change is absorbed into the change of the reference value, so that only the rapid change can be detected.

On the contrary, as a simple algorithm for detecting the slow change, there is a method for making the determination based on the continuation time beyond the threshold value. If the threshold value is exceeded over a certain period of time, it is regarded as the slow change. Another implementation method involves taking the moving average of observation data. If the threshold value process is performed for the data, only the slow change can be detected.

### Sixth example

The line design for the transmission system is made by estimating the loss on the transmission section in the following manner as described in the paragraph of Description of Related Art.

"Transmission line loss on line design" = "measured value of transmission line loss or probable estimated value of loss" + "loss increase margin for repairing the deterioration by aging or damage of the transmission line occurring in the future"

Namely, the transmission system is designed with margin so that the transmission system may not fail even if the worst loss value on the transmission section possibly occurs during the long operation period of the transmission system. Since the loss increase can be endured up to the loss increase margin expected at the time of line design, the alarm threshold value for loss increase is desirably set at a point where this loss increase margin is all consumed.

Using the third example, the alarm threshold value can be set near this point. Assuming that the transmission section loss at the time when the transmission system is actually constructed to start the operation is close to "measured value of transmission line loss or probable estimated value of loss" at the time of line design, it is considered that the loss increase margin is hardly consumed. Accordingly, the level decrease allowable width of the third example may be set to the amount almost equal to the loss increase margin, and a command for recording and holding the input level as the reference value may be sent to each amplifier at the start time of the operation. Thereby, the alarm threshold value can be set near the point at which all the loss increase margin is consumed for each transmission section.

If the loss increase margin is not a unique value but is individually set from the allowable variation coefficient per distance depending on the length of transmission section and the buried environment at the time of line design, the alarm threshold value for that section may be linked with such information, using the fifth exemplary embodiment, whereby the alarm threshold value can be set near the point at which all the loss increase margin is consumed.

It is clear that the present invention is applicable to not only the optical amplification repeater but also the sending/receiving terminal device (receiving terminal device at the receiving end), and may be typically applicable to the optical transmitting/receiving device, as described in each of the above exemplary embodiments.

An exemplary advantage according to the invention is as follows. The optimal threshold value for span loss can be set to each transmission line section existing in the optical communication network, whereby the abnormal transmission line can be detected accurately.

While the invention has been particularly shown and described with reference to an exemplary embodiment thereof, the invention is not limited to this embodiment. It will be understood by those of ordinary skill in the art that various changes in form and details may be made therein without departing from the scope of the present invention as defined by the claims.

## Claims

1. A monitoring system for use in an optical transmission system of a WDM method, in which method the number of wavelengths is dynamically changed, wherein the monitoring system is adapted to monitor a power level of an input signal of an optical amplifier (11),
**characterized in that**
the input signal of said optical amplifier (11) is a wavelength division multiplexed signal, and the monitoring system is adapted to divide the power level by an obtained wavelength number information for conversion into a power level per wave of said wavelength division multiplexed signal and to compare the power level per wave with the threshold, and
the monitoring system is adapted to issue an alarm if the power level per wave gets out of a predetermined range, wherein a threshold value for issuing the alarm to decide said predetermined range is set from the outside.

2. The monitoring system according to claim 1, wherein said threshold value is decided in accordance with a loss on an optical transmission line connected to the input side of said optical amplifier (11).

3. The monitoring system according to claim 1 or 2, wherein said threshold value is set from a monitoring center.

4. The monitoring system according to any one of claims 1 to 3, wherein said threshold value is decided from plural preset threshold patterns.

5. The monitoring system according to any one of claims 1 to 4, comprising a storage part for storing the power level of the input signal of said optical amplifier (11) as a reference value in response to an external command, wherein said threshold value is set according to an allowable loss variation for said reference value.

6. The monitoring system according to any one of claims 1 to 5, wherein said predetermined range depends on at least the distance of the transmission line connected to the input side of said optical amplifier (11), a condition relating to the laying environment and the number of connector connection points.

7. The monitoring system according to any one of claims 1 to 6, wherein upon detecting a change in said power level, a filtering process for extracting the frequency components at or below a predetermined frequency from an observation signal relating to the elapsed time of said input level is performed, and the output of the filtering process is compared with the threshold value to issue said alarm.

8. The monitoring system according to any one of claims 1 to 6, wherein upon detecting a change in said power level, a filtering process for removing the frequency components at or below a predetermined frequency from an observation signal relating to the elapsed time of said input level is performed, and the output of the filtering process is compared with the threshold value to issue said alarm.

9. The monitoring system according to any one of claims 1 to 8, wherein a lower limit threshold value among the threshold values for deciding said predetermined range is set based on a margin predetermined on the basis of expected increased future losses on the optical transmission line connected to the input side of said optical amplifier (11).

10. An optical transmitting/receiving device of a WDM method, in which method the number of wavelengths is dynamically changed, said device comprising an optical amplifier (11) and an alarm issuing part adapted to monitor a power level of an input signal of said optical amplifier,
**characterized in that**
the input signal of said optical amplifier (11) is a wavelength division multiplexed signal, and the device is adapted to divide the power level by an obtained wavelength number information for conversion into a power level per wave of said wavelength division multiplexed signal and to compare the power level per wave with a threshold, and the device is adapted to issue an alarm if the power level per wave gets out of a predetermined range, wherein the device comprises a storage part (16) for storing a threshold value for issuing the alarm to decide said predetermined range in response to an external control signal.

11. The optical transmitting/receiving device according to claim 10, wherein said threshold value is decided in accordance with a loss on an optical transmission line connected to the input side of said optical amplifier (11).

12. The optical transmittine/receiving device according to claim 10 or 11, wherein said threshold value is set from a monitoring center (5).

13. The optical transmitting/receiving device according to any one of claims 10 to 12, wherein said threshold value is decided from plural preset threshold patterns.

14. The optical transmitting/receiving device according to any one of claims 10 to 13, wherein the power level of the input signal of said optical amplifier (11) is stored in said storage part (16) as a reference value in response to an external command, and said threshold value is set according to an allowable loss variation for said reference value.

15. The optical transmitting/receiving device according to any one of claims 10 to 14, wherein said predetermined range depends on at least the distance of the transmission line connected to the input side of said optical amplifier, a condition relating to the laying environment and the number of connector connection points.

16. The optical transmitting/receiving device according to any one of claims 10 to 15, wherein upon detecting a change in said power level, said alarm is issued if a level change is observed over a predetermined period of time.

17. The optical transmitting/receiving device according to any one of claims 10 to 15, wherein upon detecting a change in said power level, said alarm is issued if a level change is observed in a predetermined amount or more within a predetermined period of time.

18. The optical transmitting/receiving device according to any one of claims 10 to 17, wherein a lower limit threshold value among the threshold values for deciding said predetermined range is set based on a margin predetermined on the basis of expected increased future losses on the optical transmission line connected to the input side of said optical amplifier.

19. A monitoring level setting method for use in an optical transmission system of a WDM method, in which method the number of wavelengths is dynamically changed, wherein said method monitors a power level of an input signal of an optical amplifier (11),
**characterized in that**
the input signal of said optical amplifier (11) is a wavelength division multiplexed signal, the power is divided by an obtained wavelength number information for conversion into a power level per wave of said wavelength division multiplexed signal, and the power level per wave is compared with a threshold, and
issues an alarm if the power level per wave gets out of a predetermined range, comprising: setting a threshold value for issuing the alarm to decide said predetermined range in response to an external control signal.

20. The monitoring level setting method according to claim 19, wherein said threshold value is decided in accordance with a loss on an optical transmission line connected to the input side of said optical amplifier.

21. The monitoring level setting method according to claim 19 or 20, further comprising setting said threshold value from a monitoring center.

22. The monitoring level setting method according to any one of claims 19 to 21, further comprising deciding said threshold value from plural preset threshold patterns.

## Patentansprüche

1. Überwachungssystem zur Verwendung in einem optischen Übertragungssystem eines WDM-Verfahrens, in dem die Anzahl von Wellenlängen dynamisch geändert wird, wobei das Überwachungssystem dazu geeignet ist, einen Leistungspegel eines Eingangssignals eines optischen Verstärkers (11) zu überwachen,
**dadurch gekennzeichnet, dass**
das Eingangssignal des optischen Verstärkers (11) ein Wellenlängenmultiplexsignal ist und das Überwachungssystem dazu geeignet ist, den Leistungspegel durch eine erhaltene Wellenlängenanzahlinformation zu teilen und in einen Leistungspegel pro Welle des Wellenlängenmultiplexsignals umzuwandeln, und den Leistungspegel pro Welle mit einem Schwellenwert zu vergleichen; und
das Überwachungssystem dazu geeignet ist, ein Alarmsignal auszugeben, wenn der Leistungspegel pro Welle einen vorgegebenen Bereich verlässt, wobei ein Schwellenwert für die Ausgabe des Alarmsignals zum Festlegen des vorgegebenen Bereichs von außen gesetzt wird.

2. Überwachungssystem nach Anspruch 1, wobei der Schwellenwert gemäß einer Dämpfung auf einer mit der Eingangsseite des optischen Verstärkers (11) verbundenen optischen Übertragungsleitung bestimmt wird.

3. Überwachungssystem nach Anspruch 1 oder 2, wobei der Schwellenwert von einer Überwachungszentrale gesetzt wird.

4. Überwachungssystem nach einem der Ansprüche 1 bis 3, wobei der Schwellenwert unter mehreren vorgegebenen Schwellenwertmustern bestimmt wird.

5. Überwachungssystem nach einem der Ansprüche 1 bis 4, mit einem Speicherteil zum Speichern des Leistungspegels des Eingangssignals des optischen Verstärkers (11) als einen Referenzwert in Antwort auf einen externen Befehl, wobei der Schwellenwert gemäß einer zulässigen Dämpfungsschwankung für den Referenzwert gesetzt wird.

6. Überwachungssystem nach einem der Ansprüche 1 bis 5, wobei der vorgegebene Bereich mindestens von der Länge der mit der Eingangsseite des optischen Verstärkers (11) verbundenen Übertragungsleitung, einer mit der Verlegungsumgebung in Beziehung stehenden Bedingung und/oder der Anzahl von Verbinderanschlusspunkten abhängig ist.

7. Überwachungssystem nach einem der Ansprüche 1 bis 6, wobei, wenn eine Änderung des Leistungspegels erfasst wird, eine Filterverarbeitung zum Extrahieren der Frequenzkomponenten bei oder unterhalb einer vorgegebenen Frequenz von einem Überwachungssignal ausgeführt wird, das mit der aufgelaufenen Zeit des Eingangspegels in Beziehung steht, und das Ausgangssignal des Filterprozesses mit dem Schwellenwert verglichen wird, um das Alarmsignal auszugeben.

8. Überwachungssystem nach einem der Ansprüche 1 bis 6, wobei, wenn eine Änderung des Leistungspegels erfasst wird, eine Filterverarbeitung zum Entfernen der Frequenzkomponenten bei oder unterhalb einer vorgegebenen Frequenz von einem Überwachungssignal ausgeführt wird, das mit der aufgelaufenen Zeit des Eingangspegels in Beziehung steht, und das Ausgangssignal des Filterprozesses mit dem Schwellenwert verglichen wird, um das Alarmsignal auszugeben.

9. Überwachungssystem nach einem der Ansprüche 1 bis 8, wobei ein unterer Grenzschwellenwert unter den Schwellenwerten zum Festlegen des vorgegebenen Bereichs basierend auf einem Spielraum bestimmt wird, der auf der Basis erwarteter größerer zukünftiger Dämpfungen auf der mit der Eingangsseite des optischen Verstärkers (11) verbundenen optischen Übertragungsleitung festgelegt wird.

10. Optisches Übertragungs-/Empfangsgerät eines WDM-Verfahrens, in dem die Anzahl von Wellenlängen dynamisch geändert wird, wobei das Gerät einen optischen Verstärker (11) und ein Alarmsignalausgabeteil aufweist, das dazu geeignet ist, einen Leistungspegel eines Eingangssignals des optischen Verstärkers zu überwachen,
**dadurch gekennzeichnet, dass**
das Eingangssignal des optischen Verstärkers (11) ein Wellenlängenmultiplexsignal ist und das Gerät dazu geeignet ist, den Leistungspegel durch eine erhaltene Wellenlängenanzahlinformation zu teilen und in einen Leistungspegel pro Welle des Wellenlängenmultiplexsignals umzuwandeln, und den Leistungspegel pro Welle mit einem Schwellenwert zu vergleichen; und
das Gerät dazu geeignet ist, ein Alarmsignal auszugeben, wenn der Leistungspegel pro Welle einen vorgegebenen Bereich verlässt, wobei das Gerät ein Speicherteil (16) zum Speichern eines Schwellenwertes für die Ausgabe des Alarmsignals zum Festlegen des vorgegebenen Bereichs in Antwort auf ein externes Steuersignal aufweist.

11. Optisches Übertragungs-/Empfangsgerät nach Anspruch 10, wobei der Schwellenwert gemäß einer Dämpfung auf einer mit der Eingangsseite des optischen Verstärkers (11) verbundenen optischen Übertragungsleitung bestimmt wird.

12. Optisches Übertragungs-/Empfangsgerät nach Anspruch 10 oder 11, wobei der Schwellenwert von einer Überwachungszentrale (5) gesetzt wird.

13. Optisches Übertragungs-/Empfangsgerät nach einem der Ansprüche 10 bis 12, wobei der Schwellenwert unter mehreren vorgegebenen Schwellenwertmustern bestimmt wird.

14. Optisches Übertragungs-/Empfangsgerät nach einem der Ansprüche 10 bis 13, wobei der Leistungspegel des Eingangssignals des optischen Verstärkers (11) in Antwort auf einen externen Befehl als ein Referenzwert im Speicherteil (16) gespeichert wird, wobei der Schwellenwert gemäß einer zulässigen Dämpfungsschwankung für den Referenzwert gesetzt wird.

15. Optisches Übertragungs-/Empfangsgerät nach einem der Ansprüche 10 bis 14, wobei der vorgegebene Bereich mindestens von der Länge der mit der Eingangsseite des optischen Verstärkers verbundenen Übertragungsleitung, einer mit der Verlegungsumgebung in Beziehung stehenden Bedingung und/oder der Anzahl von Verbinderanschlusspunkten abhängig ist.

16. Optisches Übertragungs-/Empfangsgerät nach einem der Ansprüche 10 bis 15, wobei, wenn eine Änderung des Leistungspegels erfasst wird, das Alarmsignal ausgegeben wird, wenn eine Pegeländerung über eine vorgegebene Zeitdauer erfasst wird.

17. Optisches Übertragungs-/Empfangsgerät nach einem der Ansprüche 10 bis 15, wobei, wenn eine Änderung des Leistungspegels erfasst wird, das Alarmsignal ausgegeben wird, wenn innerhalb einer vorgegebenen Zeitdauer eine Pegeländerung erfasst wird, die größer oder gleich einem vorgegebenen Maß ist.

18. Optisches Übertragungs-/Empfangsgerät nach einem der Ansprüche 10 bis 17, wobei ein unterer Grenzschwellenwert unter den Schwellenwerten zum Festlegen des vorgegebenen Bereichs basierend auf einem Spielraum bestimmt wird, der auf der Basis erwarteter größerer zukünftiger Dämpfungen auf der mit der Eingangsseite des optischen Verstärkers verbundenen optischen Übertragungsleitung festgelegt wird.

19. Überwachungspegelsetzverfahren zur Verwendung in einem optischen Übertragungssystem eines WDM-Verfahrens, in dem die Anzahl von Wellenlängen dynamisch geändert wird, wobei das Verfahren einen Leistungspegel eines Eingangssignals eines optischen Verstärkers (11) überwacht,
**dadurch gekennzeichnet, dass**
das Eingangssignal des optischen Verstärkers (11) ein Wellenlängenmultiplexsignal ist, die Leistung durch eine erhaltene Wellenlängenanzahlinformation geteilt und in einen Leistungspegel pro Welle des Wellenlängenmultiplexsignals umgewandelt wird, und der Leistungspegel pro Welle mit einem Schwellenwert verglichen wird; und
ein Alarmsignal ausgegeben wird, wenn der Leistungspegel pro Welle einen vorgegebenen Bereich verlässt;
ferner mit dem Schritt zum Setzen eines Schwellenwertes für die Ausgabe des Alarmsignals zum Festlegen des vorgegebenen Bereichs in Antwort auf ein externes Steuersignal.

20. Verfahren nach Anspruch 19, wobei der Schwellenwert gemäß einer Dämpfung auf einer mit der Eingangsseite des optischen Verstärkers verbundenen optischen Übertragungsleitung bestimmt wird.

21. Verfahren nach Anspruch 19 oder 20, ferner mit dem Schritt zum Setzen des Schwellenwertes von einer Überwachungszentrale.

22. Verfahren nach einem der Ansprüche 19 bis 21, ferner mit dem Schritt zum Bestimmen des Schwellenwertes unter mehreren vorgegebenen Schwellenwertmustern.

## Revendications

1. Système de surveillance à utiliser dans un système de transmission optique d'un procédé de multiplexage par répartition en longueur d'onde (WDM), procédé dans lequel le nombre de longueurs d'onde est changé dynamiquement, dans lequel le système de surveillance est adapté pour surveiller un niveau de puissance d'un signal d'entrée d'un amplificateur optique (11),
**caractérisé en ce que**
le signal d'entrée dudit amplificateur optique (11) est un signal multiplexé par répartition en longueur d'onde, et le système de surveillance est adapté pour diviser le niveau de puissance par une information de nombre de longueurs d'onde obtenues, pour conversion en un niveau de puissance par onde dudit signal multiplexé par répartition en longueur d'onde et pour comparer le niveau de puissance par onde avec le seuil, et
le système de surveillance est adapté pour émettre une alarme si le niveau de puissance par onde sort d'une plage prédéterminée, où une valeur de seuil permettant d'émettre l'alarme pour décider ladite plage prédéterminée est établie depuis l'extérieur.

2. Système de surveillance selon la revendication 1, dans lequel ladite valeur de seuil est décidée en conformité avec une perte sur une ligne de transmission optique connectée au côté entrée dudit amplificateur optique (11).

3. Système de surveillance selon la revendication 1 ou 2, dans lequel ladite valeur de seuil est établie depuis un centre de surveillance.

4. Système de surveillance selon l'une quelconque des revendications 1 à 3, dans lequel ladite valeur de seuil est décidée à partir de plusieurs modèles de seuil préétablis.

5. Système de surveillance selon l'une quelconque des revendications 1 à 4, comprenant une partie de stockage permettant de stocker le niveau de puissance du signal d'entrée dudit amplificateur optique (11) comme une valeur de référence en réponse à un ordre externe, dans lequel ladite valeur de seuil est établie selon une variation de perte admissible pour ladite valeur de référence.

6. Système de surveillance selon l'une quelconque des revendications 1 à 5, dans lequel ladite plage prédéterminée dépend au moins de la distance de la ligne de transmission connectée au côté entrée dudit amplificateur optique (11), d'une condition relative à l'environnement de pose et du nombre de points de connexion aux connecteurs.

7. Système de surveillance selon l'une quelconque des revendications 1 à 6, dans lequel lors de la détection d'un changement dudit niveau de puissance, un processus de filtrage permettant d'extraire les composantes de fréquence à ou en dessous d'une fréquence prédéterminée à partir d'un signal d'observation relatif au temps écoulé dudit niveau d'entrée est effectué, et la sortie du processus de filtrage est comparée avec la valeur de seuil pour émettre ladite alarme.

8. Système de surveillance selon l'une quelconque des revendications 1 à 6, dans lequel lors de la détection d'un changement dudit niveau de puissance, un processus de filtrage permettant d'éliminer les composantes de fréquence à ou en dessous d'une fréquence prédéterminée à partir d'un signal d'observation relatif au temps écoulé dudit niveau d'entrée est effectué, et la sortie du processus de filtrage est comparée avec la valeur de seuil pour émettre ladite alarme.

9. Système de surveillance selon l'une quelconque des revendications 1 à 8, dans lequel une valeur de seuil limite inférieure parmi les valeurs de seuil permettant de décider ladite plage prédéterminée est établie en se basant sur une marge prédéterminée d'après des pertes futures accrues attendues sur la ligne de transmission optique connectée au côté entrée dudit amplificateur optique (11).

10. Dispositif émetteur-récepteur optique d'un procédé WDM, dans lequel le nombre de longueurs d'onde est changé dynamiquement, ledit dispositif comprenant un amplificateur optique (11) et une partie d'émission d'alarme adaptée pour surveiller un niveau de puissance d'un signal d'entrée dudit amplificateur optique,
**caractérisé en ce que**
le signal d'entrée dudit amplificateur optique (11) est un signal multiplexé par répartition en longueur d'onde, et le dispositif est adapté pour diviser le niveau de puissance par une information de nombre de longueurs d'onde obtenues, pour conversion en un niveau de puissance par onde dudit signal multiplexé par répartition en longueur d'onde et pour comparer le niveau de puissance par onde avec un seuil, et le dispositif est adapté pour émettre une alarme si le niveau de puissance par onde sort d'une plage prédéterminée, où le dispositif comprend une partie de stockage (16) permettant de stocker une valeur de seuil permettant d'émettre l'alarme pour décider ladite plage prédéterminée en réponse à un signal de commande externe.

11. Dispositif émetteur-récepteur optique selon la revendication 10, dans lequel ladite valeur de seuil est décidée en conformité avec une perte sur une ligne de transmission optique connectée au côté entrée dudit amplificateur optique (11).

12. Dispositif émetteur-récepteur optique selon la revendication 10 ou 11, dans lequel ladite valeur de seuil est déterminée à partir d'un centre de surveillance (5).

13. Dispositif émetteur-récepteur optique selon l'une quelconque des revendications 10 à 12, dans lequel ladite valeur de seuil est décidée à partir de plusieurs modèles de seuil préétablis.

14. Dispositif émetteur-récepteur optique selon l'une quelconque des revendications 10 à 13, dans lequel le niveau de puissance du signal d'entrée dudit amplificateur optique (11) est stocké dans ladite partie de stockage (16) comme une valeur de référence en réponse à un ordre externe, et ladite valeur de seuil est établie selon une variation de perte admissible pour ladite valeur de référence.

15. Dispositif émetteur-récepteur optique selon l'une quelconque des revendications 10 à 14, dans lequel ladite plage prédéterminée dépend au moins de la distance de la ligne de transmission connectée au côté entrée dudit amplificateur optique, d'une condition relative à l'environnement de pose et du nombre de points de connexion aux connecteurs.

16. Dispositif émetteur-récepteur optique selon l'une quelconque des revendications 10 à 15, dans lequel lors de la détection d'un changement dudit niveau de puissance, ladite alarme est émise si un changement de niveau est observé sur une période de temps prédéterminée.

17. Dispositif émetteur-récepteur optique selon l'une quelconque des revendications 10 à 15, dans lequel lors de la détection d'un changement dudit niveau de puissance, ladite alarme est émise si un changement de niveau est observé dans une ampleur prédéterminée ou plus dans une période de temps prédéterminée.

18. Dispositif émetteur-récepteur optique selon l'une quelconque des revendications 10 à 17, dans lequel une valeur de seuil limite inférieure parmi les valeurs de seuil permettant de décider ladite plage prédéterminée est établie en se basant sur une marge prédéterminée d'après des pertes futures accrues attendues sur la ligne de transmission optique connectée au côté entrée dudit amplificateur optique.

19. Procédé d'établissement de niveau de surveillance à utiliser dans un système de transmission optique d'un procédé WDM, dans lequel le nombre de longueurs d'onde est changé dynamiquement, dans lequel ledit procédé surveille un niveau de puissance d'un signal d'entrée d'un amplificateur optique (11),
**caractérisé en ce que**
le signal d'entrée dudit amplificateur optique (11) est un signal multiplexé par répartition en longueur d'onde, la puissance est divisée par une information de nombre de longueurs d'ondes obtenues pour conversion en un niveau de puissance par onde dudit signal multiplexé par répartition en longueur d'onde, et le niveau de puissance par onde est comparé avec un seuil, et
il émet une alarme si le niveau de puissance par onde sort d'une plage prédéterminée, comprenant l'établissement d'une valeur de seuil pour émettre l'alarme pour décider ladite plage prédéterminée en réponse à un signal de commande externe.

20. Procédé d'établissement de niveau de surveillance selon la revendication 19, dans lequel ladite valeur de seuil est décidée en conformité avec une perte sur une ligne de transmission optique connectée au côté entrée dudit amplificateur optique.

21. Procédé d'établissement de niveau de surveillance selon la revendication 19 ou 20, comprenant en outre l'établissement de ladite valeur de seuil à partir d'un centre de surveillance.

22. Procédé d'établissement de niveau de surveillance selon l'une quelconque des revendications 19 à 21, comprenant en outre la décision de ladite valeur de seuil à partir de plusieurs modèles de seuil préétablis.
